# EUROPEAN PATENT APPLICATION

(11) **EP 4 550 459 A1**
(43) Date of publication of application: **07.05.2025**
(21) Application number: 23831027.0
(22) Date of filing: 09.06.2023
(51) Int. Cl.: H01M 4/525, C01G 53/00, H01M 4/36

(54) **POSITIVE ELECTRODE ACTIVE SUBSTANCE FOR NON-AQUEOUS ELECTROLYTE SECONDARY BATTERY AND NON-AQUEOUS ELECTROLYTE SECONDARY BATTERY**

(30) Priority: 29.06.2022 JP 2022104909
(71) Applicant: Panasonic Intellectual Property Management Co., Ltd., Kadoma-shi, Osaka 571-0057 (JP)
(72) Inventor: TOGO Masakazu, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2023/021475
(87) International publication number: WO 2024/004577

(57) **Abstract**

A non-aqueous electrolyte secondary battery according to one embodiment of the present invention comprises: a positive electrode containing a positive electrode active substance; a negative electrode; and a non-aqueous electrolyte. The positive electrode active substance comprises a lithium transition metal compound oxide containing at least Ni. The lithium transition metal compound oxide is secondary particles formed by aggregation of primary particles, and the primary particles present on the surface of the secondary particles have a crystal structure that includes a rock salt structure, a spinel structure, and a layered rock salt structure formed in order from the particle surface.

## Description

### TECHNICAL FIELD

The present disclosure relates to a positive electrode active material for a non-aqueous electrolyte secondary battery, and a non-aqueous electrolyte secondary battery using the positive electrode active material.

### BACKGROUND ART

A lithium-transition metal composite oxide with a high Ni content has attracted attention in recent years as a positive electrode active material with a high energy density. In the lithium-transition metal composite oxide with a high Ni content, however, surface structure of composite oxide particles tends to be unstable, and has a problem of increased capacity deterioration in long-term charge-discharge cycles.

In view of the above circumstances, Patent Literature 1 proposes a positive electrode active material represented by the composition formula LiNiₓMn_{y}Co_{z}O₂, the positive electrode active material including core particles having a layered rock-salt structure with a space group R-3m and a coating layer coating the core particles and having a spinel structure. Patent Literature 1 describes an effect that use of this positive electrode active material may inhibit capacity deterioration of the positive electrode active material and increase in conductive resistance.

### CITATION LIST

### PATENT LITERATURE

PATENT LITERATURE 1: Japanese Unexamined Patent Application Publication No. 2020-9562

### SUMMARY

As noted above, when the lithium-transition metal composite oxide with a high Ni content is used as the positive electrode active material of the non-aqueous electrolyte secondary battery, it is important challenge that the capacity deterioration due to charge and discharge is inhibited to improve cycle characteristics (durability). As a result of investigation by the present inventors, it has been found that use of the positive electrode active material of Patent Literature 1 deteriorates initial capacity of the battery. That is, the lithium-transition metal composite oxide with a high Ni content is expected to have a high energy density, but the positive electrode active material of Patent Literature 1 loses this effect.

A positive electrode active material for a non-aqueous electrolyte secondary battery according to the present disclosure includes a lithium-transition metal composite oxide containing at least Ni, wherein the lithium-transition metal composite oxide is of secondary particles each formed by aggregation of primary particles, and the primary particles present on surfaces of the secondary particles have crystal structures including a rock-salt structure, a spinel structure, and a layered rock-salt structure that are formed in this order from the particle surfaces.

A non-aqueous electrolyte secondary battery according to the present disclosure comprises: a positive electrode including the above positive electrode active material; a negative electrode; and a non-aqueous electrolyte.

The positive electrode active material according to the present disclosure is a positive electrode active material with a high Ni content and a high energy density, and inhibits capacity deterioration due to charge and discharge of the non-aqueous electrolyte secondary battery to improve cycle characteristics. A non-aqueous electrolyte secondary battery using the positive electrode active material according to the present disclosure has, for example, a high energy density and excellent cycle characteristics.

### BRIEF DESCRIPTION OF DRAWINGS

FIG. 1 is a view schematically illustrating an axial cross section of a non-aqueous electrolyte secondary battery (cylindrical battery) of an example of an embodiment.
FIG. 2 is a view schematically illustrating a particle cross section of a positive electrode active material of an example of an embodiment.
FIG. 3 is a view schematically illustrating crystal structures on particle surfaces and a proximity thereof of a positive electrode active material observed with a transmission electron microscope.

### DESCRIPTION OF EMBODIMENTS

As noted above, use of the lithium-transition metal composite oxide with a high Ni content as the positive electrode active material has the problem of increased capacity deterioration in long-term charge-discharge cycles. It is presumed that a major factor of this problem is destabilization of the particle surface structure of the positive electrode active material due to charge and discharge to cause transformation and growth of the crystal structures on the particle surfaces to a NiO phase, which is a rock-salt structure. Then, the NiO phase inhibits diffusion of Li ions, and as a result, resistance increases to deteriorate the capacity.

As a result of diligent investigation by the present inventors for solving the above problem, it has been revealed that that the cycle characteristics are specifically improved by forming a rock-salt structure, a spinel structure, and a layered rock-salt structure in this order from particle surfaces of primary particles present on surfaces of secondary particles of the positive electrode active material (lithium-transition metal composite oxide containing Ni). It is presumed that generation of the spinel structure as an underlayer of the NiO phase, which is the rock-salt structure, inhibits growth of the NiO phase to consequently effectively inhibit the capacity deterioration due to charge and discharge.

Note that, it is considered that the stacked structure of the rock-salt structure and the spinel structure is essential as the surface layer of the primary particles present on the surfaces of the secondary particles in order to achieve both the high energy density and the good cycle characteristics.

Hereinafter, an example of embodiments of the positive electrode active material according to the present disclosure and a non-aqueous electrolyte secondary battery using this positive electrode active material will be described in detail with reference to the drawings. Note that the scope of the present disclosure includes constitution formed by selectively combining constituents of a plurality of embodiments and modified examples described hereinafter.

Hereinafter, a cylindrical battery housing a wound electrode assembly 14 in a bottomed cylindrical exterior housing can 16 will be exemplified as the non-aqueous electrolyte secondary battery, but the exterior of the battery is not limited to a cylindrical exterior housing can. The non-aqueous electrolyte secondary battery according to the present disclosure may be, for example, a rectangular battery comprising a rectangular exterior housing can, a coin-shaped battery comprising a coin-shaped exterior housing can, or a pouch battery comprising an exterior constructed of a laminate sheet including a metal layer and a resin layer. The electrode assembly is not limited to a wound electrode assembly, and may be a stacked electrode assembly in which a plurality of positive electrodes and a plurality of negative electrodes are alternately stacked via a separator.

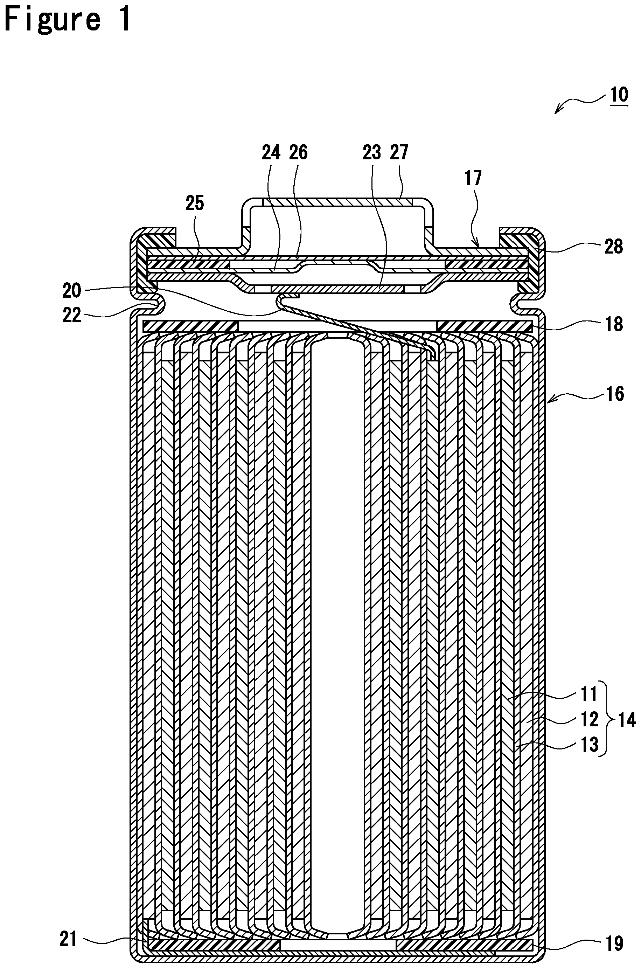

FIG. 1 is a sectional view of a non-aqueous electrolyte secondary battery 10 of an embodiment example. As illustrated in FIG. 1, the non-aqueous electrolyte secondary battery 10 comprises the wound electrode assembly 14, a non-aqueous electrolyte (not illustrated), and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent includes ethylene carbonate (EC), ethyl methyl carbonate (EMC), dimethyl carbonate (DMC), diethyl carbonate (DEC), and a mixed solvent thereof. The non-aqueous solvent may contain a halogen-substituted derivative in which hydrogen of these solvents is at least partially substituted with a halogen atom such as fluorine (for example, fluoroethylene carbonate and the like). For the electrolyte salt, a lithium salt such as LiPF₆ is used, for example. Vinylene carbonate (VC) at less than or equal to 5 mass% relative to a mass of the non-aqueous electrolyte may be added.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealing inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically a positive electrode active material constituting the positive electrode 11, will be described in detail.

### [Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum, a film in which such a metal is disposed on the surface, or the like may be used. The positive electrode mixture layer includes a positive electrode active material, a binder, and a conductive agent, and is preferably provided on both surfaces of the positive electrode core except for a portion where a positive electrode lead 20 is to be connected. The positive electrode 11 may be produced by, for example, applying a positive electrode mixture slurry including the positive electrode active material, the binder, the conductive agent, and the like on the surface of the positive electrode core, and drying and then compressing the coating to form the positive electrode mixture layer on both the surfaces of the positive electrode core.

Examples of the conductive agent included in the positive electrode mixture layer may include carbon materials such as carbon black such as acetylene black and Ketjenblack, graphite, carbon nanotube (CNT), carbon nanofiber, and graphene. Examples of the binder included in the positive electrode mixture layer may include fluorine-containing resins such as polytetrafluoroethylene (PTFE) and polyvinylidene fluoride (PVdF), polyacrylonitrile (PAN), a polyimide, an acrylic resin, and a polyolefin. With any one of these resins, carboxymethylcellulose (CMC) or a salt thereof, polyethylene oxide (PEO), or the like may be used in combination.

The positive electrode 11 includes a lithium-transition metal oxide containing at least Ni. Hereinafter, for convenience of description, this lithium-transition metal composite oxide is referred to as "composite oxide (Z)". The composite oxide (Z) functions as the positive electrode active material. The positive electrode active material includes the composite oxide (Z) as a main component, and may be made of substantially only the composite oxide (Z). The positive electrode active material may include a composite oxide other than the composite oxide (Z) or another compound within a range not impairing the object of the present disclosure.

The composite oxide (Z) contains Ni at greater than or equal to 80 mol% relative to a total number of moles of metal elements excluding Li. Setting the content rate of Ni to greater than or equal to 80 mol% yields the battery with a high energy density. The content rate of Ni may be greater than or equal to 85 mol%, or may be greater than or equal to 90 mol% relative to the total number of moles of metal elements excluding Li. An upper limit of the content rate of Ni is, for example, 95 mol%.

The composite oxide (Z) preferably further contains at least one selected from Mn and Co. An example of the preferable composite oxide (Z) include: a lithium-transition metal composite oxide containing Ni, Co, and Al; a lithium-transition metal composite oxide containing Ni, Co, and Mn; and a lithium-transition metal composite oxide containing Ni and Mn. When the composite oxide (Z) contains Co, a content rate of Co is preferably greater than or equal to 2 mol% and less than or equal to 7 mol% relative to the total number of moles of metal elements excluding Li. In this case, the battery with high capacity and excellent cycle characteristics is easily achieved while reducing the material cost.

When the composite oxide (Z) contains Mn, a content rate of Mn is preferably greater than or equal to 2 mol% and less than or equal to 15 mol% relative to the total number of moles of metal elements excluding Li. When the content rate of Ni is greater than or equal to 90 mol%, the content rate of Mn is, for example, greater than or equal to 2 mol% and less than or equal to 10 mol%. In this case, the battery performance such as the capacity and the cycle characteristics may be more effectively improved. When the composite oxide (Z) contains Al, a content rate of Al is preferably greater than or equal to 1 mol% and less than or equal to 5 mol% relative to the total number of moles of metal elements excluding Li. In this case, stability of the crystal structures may be increased while achieving the high capacity, and the cycle characteristics may be more effectively improved.

The composite oxide (Z) preferably further contains at least one selected from Ca and Sr. The composite oxide (Z) is, for example, a composite oxide represented by the composition formula LiₐNi_{b}Co_{c}MnₐAlₑCaᵣSr_{g}Oₕ, wherein 0.8 ≤ a ≤ 1.2, 0.80 ≤ b < 1, 0 ≤ c ≤ 0.07, 0 ≤ d ≤ 0.10, 0 ≤ e ≤ 0.05, 0 ≤ f ≤ 0.01, 0 ≤ g ≤ 0.01, 1 ≤ h ≤ 2, and b+c+d+e+f+g = 1. When the composite oxide (Z) contains at least one selected from Ca and Sr, the effect of improving the cycle characteristics becomes more remarkable.

A content rate of Ca and Sr in the composite oxide (Z) is, for example, less than or equal to 1 mol% relative to the total number of moles of metal elements excluding Li. When the composite oxide (Z) contains Ca and Sr, a total amount of Ca and Sr is preferably less than or equal to 1 mol%. In this case, the cycle characteristics may be effectively improved without defects such as increase in resistance and capacity deterioration. Although Ca and Sr are effective even at an extremely small amount, a lower limit of the content rate is preferably 0.05 mol%. The content rate of the total of Ca and Sr is preferably greater than or equal to 0.05 mol% and less than or equal to 1 mol%, and more preferably greater than or equal to 0.1 mol% and less than or equal to 0.5 mol% relative to the total number of moles of metal elements excluding Li.

The at least one selected from Ca and Sr is present on at least, for example, an interface between the primary particles inside the secondary particles of the composite oxide (Z). In this case, an effect of inhibiting side reactions is considered to be remarkable, and the cycle characteristics may be effectively improved. Ca and Sr present between the interface of the primary particles may be confirmed by TEM-EDX or STEM-EDX. The at least one selected from Ca and Sr is present on each interface between the primary particles in a uniformly dispersed state, for example. These may adhere to the surfaces of the secondary particles.

The composite oxide (Z) may contain an element other than Li, Ni, Mn, Co, Al, Ca, and Sr. An example of the element includes Nb, Zr, Ti, W, Si, B, Mg, Fe, Cu, Na, K, Ba, and Mo. Content rates of the elements constituting the composite oxide (Z) may be measured by an inductively coupled plasma atomic emission spectrometer (ICP-AES), an electron beam micro analyzer (EPMA), energy dispersive X-ray analyzer (EDX), or the like.

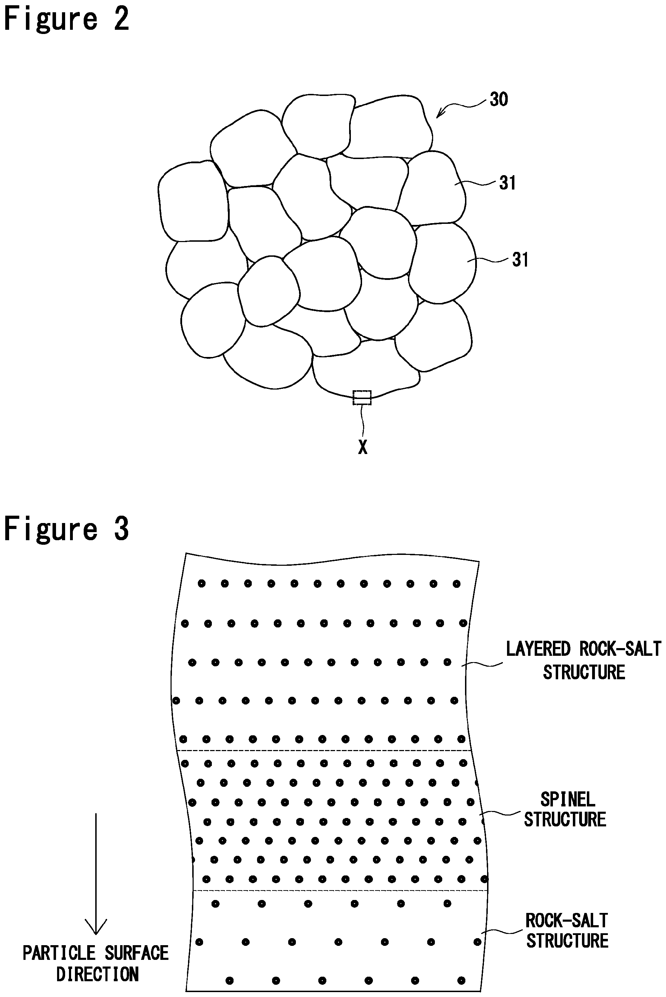

FIG. 2 is a view schematically illustrating a particle cross section of the composite oxide (Z). As illustrated in FIG. 2, the composite oxide (Z) is of secondary particles 30 each formed by aggregation of a plurality of primary particles 31. A median diameter (D50) of the composite oxide (Z) on a volumetric basis is, for example, greater than or equal to 3 µm and less than or equal to 30 µm, and preferably greater than or equal to 5 µm and less than or equal to 25 µm. Since the composite oxide (Z) is of the secondary particles 30 each formed by aggregation of the primary particles 31, the D50 of the composite oxide means D50 of the secondary particles 30.

The D50 means a particle diameter at which a cumulative frequency is 50% from a smaller particle diameter side in a particle size distribution on a volumetric basis. The particle size distribution of the composite oxide (Z) may be measured by using a laser diffraction particle size distribution measuring device (for example, MT3000II, manufactured by MicrotracBEL Corp.) with water as a dispersion medium.

An average particle diameter of the primary particles 31 is, for example, greater than or equal to 0.05 µm and less than or equal to 1 µm. The average particle diameter of the primary particles 31 is calculated by averaging diameters of circumscribed circles of the primary particles 31 extracted by analyzing a scanning electron microscope (SEM) image of the cross section of the secondary particles 30. Inside the secondary particles 30, predetermined pores may be present. The pores are present on, for example, the interface between the primary particles 31. An average porosity of the secondary particles 30 is, for example, greater than or equal to 0.1% and less than or equal to 5%. The porosity of the secondary particles 30 is a proportion of an area of the pores in the cross section of the secondary particles, and calculated by the formula: (the area of the pores / the sectional area of the secondary particles) × 100.

The porosity of the secondary particles 30 is determined by analyzing the SEM image of the cross section of the secondary particles. Regions of the primary particles 31 and the pores are extracted by appropriately selecting an image analysis software such as Image J and Avizo-Materials Science. The regions of the primary particles 31 and the pores are extracted by subjecting the SEM image to noise removal such as a non-local means filter and BM3D, detecting an edge, and overlapping and applying a threshold of brightness with a Marker Based-Watershed method. A region having a high-brightness region as a center detected by the Watershed method is defined as the primary particle, and a low-brightness region is defined as the pores.

FIG. 3 is a view schematically illustrating the crystal structures of the particle surfaces and a proximity thereof (the region illustrated with X in FIG. 2) of the composite oxide (Z) observed with a transmission electron microscope (TEM or STEM). The crystal structure in the micro-region of the composite oxide (Z) may be analyzed by a nano-beam electron diffraction method using a TEM. FIG. 3 schematically illustrates a nano-beam electron diffraction pattern of the proximity of the surfaces of the primary particles 31 present on the surfaces of the secondary particles 30.

As illustrated in FIG. 3, the primary particles 31 present on the surfaces of the secondary particles 30 include three types of a crystal phase. The primary particles 31 present on the surfaces of the secondary particles 30 have crystal structures including a rock-salt structure, a spinel structure, and a layered rock-salt structure that are formed in this order from the particle surface. That is, the three-phase structure with the crystal structure different from each other is formed within a predetermined depth range from the surfaces (hereinafter, which may be referred to as "surface layer") of the primary particles 31. This three-phase structure may be formed on a surface layer of the primary particles 31 contacted with internal pores of the secondary particles 30, other than the surface layer of the primary particles 31 present on the surface of the secondary particles 30.

The crystal structures of the composite oxide (Z) mostly has, for example, the layered rock-salt structure except for the surface layer of the primary particles 31 present on the surfaces of the secondary particles 30 and the surface layer of the primary particles 31 contacted with the internal pores. The layered rock-salt structure is a layered crystal structure in which transition metal ions and Li ions are alternately arranged, and belongs to a space group R-3m. In the layered rock-salt structure, Li ions may move smoothly.

As noted above, the rock-salt structure and the spinel structure are formed only in the surface layer of the primary particles 31 present on the surface of the secondary particles 30 and the surface layer of the primary particles 31 contacted with the internal pores of the secondary particles 30 in the present embodiment. The rock-salt structure is considered to be a crystal phase derived from an NiO phase generated on the particle surface layer, and belongs to a space group Fm-3m. The rock-salt structure inhibits diffusion of Li ions, which differs from the layered rock-salt structure. The spinel structure belongs to a space group Fd-3m.

An average thickness of the rock-salt structure is preferably less than or equal to 5 nm, more preferably less than or equal to 4 nm, and particularly preferably less than or equal to 3 nm. When the average thickness of the rock-salt structure is within this range, the effect of improving the cycle characteristics becomes more remarkable. The average thickness of the rock-salt structure refers to an average value of shortest distances from a given position on the particle surface to the interface with the spinel structure on the cross section of the primary particles 31, and may be analyzed by a nano-beam electron diffraction method using a TEM. A lower limit of the average thickness of the rock-salt structure is not particularly limited, and an example thereof is 0.5 nm.

The rock-salt structure is formed only within a thickness range of 5 nm, particularly preferably 3 nm, from the surfaces of the specific primary particles 31. The reason why the rock-salt structure is formed limitedly within this range is presumably because of the effect by the spinel structure present in the particles on the side more inner than the rock-salt structure. The rock-salt structure is formed before charge and discharge of the battery.

An average thickness of the spinel structure is preferably less than or equal to 7 nm, more preferably less than or equal to 6 nm, and particularly preferably less than or equal to 5 nm. When the average thickness of the spinel structure is within this range, the effect of improving the cycle characteristics becomes more remarkable. The average thickness of the spinel structure refers to an average value of shortest distances from the interface with the rock-salt structure to the interface with the layered rock-salt structure on the cross section of the primary particles 31, and may be analyzed by a nano-beam electron diffraction method using a TEM. A lower limit of the average thickness of the spinel structure is not particularly limited, and an example thereof is 1.5 nm.

The spinel structure is preferably absent before charge and discharge of the battery, and preferably formed after charge and discharge. The above average thickness of the spinel structure is, for example, a value after a cycle test described later. That is, the three-phase structure of the rock-salt structure, the spinel structure, and the layered rock-salt structure is generated with charge and discharge of the battery, and the spinel structure with the above thickness is formed after a charge-discharge cycle, similar to the cycle test described later. As a result of investigation by the present inventors, it has been found that whether the spinel structure is formed or not depends on a method for synthesizing the positive electrode active material. That is, the composite oxide (Z) in which the spinel structure is to be generated after charge and discharge and a composite oxide in which no spinel structure is generated may be selectively synthesized.

The composite oxide (Z) may be synthesized by, for example, mixing and firing a transition metal oxide containing Ni, Mn, Co, Al, and the like, a Ca raw material, a Sr raw material, and a Li raw material such as lithium hydroxide (LiOH). The fired product is crushed, and then washed with water to obtain the composite oxide (Z). An example of the Ca raw material includes Ca(OH)₂, CaO, CaCO₃, CaSO₄, and Ca(NO₃)₂. An example of the Sr raw material includes Sr(OH)₂, Sr(OH)₂·H₂O, Sr(OH)₂·8H₂O, SrO, SrCO₃, SrSO₄, and Sr(NO₃)₂.

A mole ratio (Li/Me ratio) between the metal element (Me) in the composite oxide and Li in the Li raw material and a firing condition are particularly important factors for forming the above three types of the crystal phase on the surface layer of the primary particles 31, and need to be strictly controlled. A preferable Li/Me ratio is, although rather varying depending on the composition of the mixture, greater than or equal to 1.015 and less than or equal to 1.055 as an example. For example, a Li/Me ratio of excessively low, such as 1.000, increases mixing to fail to form the spinel structure. On the other hand, a Li/Me ratio of excessively high, such as 1.060, excessively proceeds the crystal growth and rapidly forms the rock-salt structure to fail to form the spinel structure.

The step of firing the mixture includes, for example, a first firing step and a second firing step at higher temperature than in the first firing step. The mixture is fired under an oxygen atmosphere, and the oxygen concentration is preferably set to greater than or equal to 85%. For example, an oxygen concentration of excessively low, such as less than or equal to 80%, increases oxygen defects to fail to form the spinel structure. A preferably first firing temperature is, although rather varying depending on the composition of the mixture, greater than or equal to 600°C and less than or equal to 680°C as an example. A preferable second firing temperature is, for example, greater than or equal to 700°C and less than or equal to 780°C. An excessively high firing temperature excessively proceeds the crystal growth and rapidly forms the rock-salt structure to fail to form the spinel structure.

The firing step is performed by feeding the above mixture into a firing furnace. A first temperature-raising rate from room temperature to the first firing temperature is preferably greater than or equal to 2°C/min and less than or equal to 4°C/min. A temperature-raising rate from the first firing temperature to the second firing temperature is preferably lower than the first temperature-raising rate. An excessively high temperature-raising rate leaves oxygen defects, strain in the structure, and the like to fail to form the spinel structure.

### [Negative Electrode]

The positive electrode 12 has a negative electrode core and a negative electrode mixture layer formed on a surface of the negative electrode core. For the negative electrode core, a foil of a metal stable within a potential range of the negative electrode 12, such as copper, a film in which such a metal is disposed on the surface, or the like may be used. The negative electrode mixture layer includes a negative electrode active material and a binder, and is preferably provided on both surfaces of the negative electrode core except for a portion where a negative electrode lead 21 is to be connected. The negative electrode 12 may be produced by, for example, applying a negative electrode mixture slurry including the negative electrode active material, the binder, and the like on the surface of the negative electrode core, and drying and then compressing the coating to form the negative electrode mixture layer on both the surfaces of the negative electrode core.

The negative electrode mixture layer includes, generally, a carbon material that reversibly absorbs and desorbs lithium ions as the negative electrode active material. A preferable example of the carbon material is a graphite such as: a natural graphite such as flake graphite, massive graphite, or amorphous graphite; and an artificial graphite such as massive artificial graphite (MAG) or graphitized mesophase-carbon microbead (MCMB). As the negative electrode active material, an active material including at least one of an element that forms an alloy with Li, such as Si and Sn, and a material containing such an element may be used. A preferable example of this active material is a Si-containing material in which Si fine particles are dispersed in a SiO₂ phase, a silicate phase such as lithium silicate, or an amorphous carbon phase. As the negative electrode active material, graphite and the Si-containing material may be used in combination.

For the binder included in the negative electrode mixture layer, a fluororesin, PAN, a polyimide, an acrylic resin, a polyolefin, or the like may be used as in the case of the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), or the like. Among them, SBR; and CMC or a salt thereof, or PAA or a salt thereof are preferably used in combination.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example A1>

### [Synthesis of Lithium-Transition Metal Composite Oxide (Positive Electrode Active Material)]

A composite oxide containing Ni, Co, and Al, and lithium hydroxide were mixed so that a mole ratio (Li/Me ratio) between the metal elements (Me) in the composite oxide and Li in lithium hydroxide was 1:1.020. This mixture was fed into a firing furnace to perform two-step firing. In the firing step, the temperature was raised under an oxygen flow (at a flow rate of 2 mL/min per 10 cm³ and 5 L/min per kilogram of the mixture) with an oxygen concentration of 95% at a temperature-raising rate (hereinafter, referred to as "first temperature-raising rate) of 3°C/min from room temperature to 650°C (hereinafter, referred to as "first firing temperature"). Thereafter, the temperature was raised at a temperature-raising rate (hereinafter, referred to as "second temperature-raising rate") of 1°C/min from 650°C to 750°C (hereinafter, referred to as "second firing temperature"), and held at 750°C for 3 hours. This fired product was crushed, and then washed with water to obtain a lithium-transition metal composite oxide (positive electrode active material).

The above lithium-transition metal composite oxide was analyzed by ICP-AES, and consequently confirmed that the composition of this composite oxide was Li_{0.99}Ni_{0.90}Co_{0.05}Al_{0.05}O₂. From an SEM image of the lithium-transition metal composite oxide, this composite oxide was confirmed to be secondary particles each formed by aggregation of primary particles.

### [Production of Positive Electrode]

As a positive electrode active material, the above lithium-transition metal composite oxide was used. The positive electrode active material, acetylene black, and polyvinylidene fluoride (PVdF) were mixed at a solid-content mass ratio of 95:3:2, and N-methyl-2-pyrrolidone (NMP) was used as a dispersion medium to prepare a positive electrode mixture slurry. This positive electrode mixture slurry was applied on both surfaces of a positive electrode core made of aluminum foil, the coating was dried, then the coating was rolled by using a roller, and cut to a predetermined electrode size to obtain a positive electrode in which a positive electrode mixture layer was formed on both the surfaces of the positive electrode core. At a part of the positive electrode, an exposed portion where the surface of the positive electrode core was exposed was provided.

### [Production of Negative Electrode]

As a negative electrode active material, natural graphite was used. The negative electrode active material, sodium carboxymethylcellulose (CMC-Na), and a dispersion of styrene-butadiene rubber (SBR) were mixed at a solid-content mass ratio of 100:1:1, and water was used as a dispersion medium to prepare a negative electrode mixture slurry. This negative electrode mixture slurry was applied on both surfaces of a negative electrode core made of copper foil, the coating was dried, then the coating was rolled by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

### [Preparation of Non-Aqueous Electrolyte Liquid]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Production of Test Cell (Non-Aqueous Electrolyte Secondary Battery)]

An aluminum lead was attached to the exposed portion of the positive electrode, and a nickel lead was attached to the exposed portion of the negative electrode. The positive electrode and the negative electrode were spirally wound via a separator made of a polyolefin to produce a wound electrode assembly. This electrode assembly was housed in a bottomed cylindrical exterior housing can, the above non-aqueous electrolyte liquid was injected, and then an opening of the exterior housing can was sealed with a sealing assembly to obtain a test cell.

### <Example A2>

A lithium-transition metal composite oxide was synthesized in the same manner as in Example A1 except that the second firing temperature was changed to 730°C, and a test cell was produced by using this composite oxide for the positive electrode active material.

### <Example A3>

A lithium-transition metal composite oxide was synthesized in the same manner as in Example A1 except that calcium hydroxide was further added as the raw material of the lithium-transition metal composite oxide, and a test cell was produced by using this composite oxide for the positive electrode active material. The composition of the positive electrode active material was confirmed to be Li_{0.99}Ni_{0.887}Co_{0.04}Al_{0.05}Ca_{0.023}O₂ by ICP-AES.

### <Example A4>

A lithium-transition metal composite oxide was synthesized in the same manner as in Example A1 except that strontium hydroxide was further added as the raw material of the lithium-transition metal composite oxide, and a test cell was produced by using this composite oxide for the positive electrode active material. The composition of the positive electrode active material was confirmed to be Li_{0.99}Ni_{0.899}Co_{0.05}Al_{0.01}Sr_{0.01}O₂ by ICP-AES.

### <Example A5>

A lithium-transition metal composite oxide was synthesized in the same manner as in Example A1 except that calcium hydroxide and strontium hydroxide were further added as the raw material of the lithium-transition metal composite oxide, and a test cell was produced by using this composite oxide for the positive electrode active material. The composition of the positive electrode active material was confirmed to be Li_{0.99}Ni_{0.877}Co_{0.05}Al_{0.04}Ca_{0.023}Sr_{0.01}O₂ by ICP-AES.

### <Comparative Example A1>

A lithium-transition metal composite oxide was synthesized in the same manner as in Example A1 except that the first temperature-raising rate was changed to 5°C/min and the second temperature-raising rate was changed to 3°C/min, and a test cell was produced by using this composite oxide for the positive electrode active material.

### <Comparative Example A2>

A lithium-transition metal composite oxide was synthesized in the same manner as in Example A1 except that the oxygen concentration in the firing step was changed to 80%, and a test cell was produced by using this composite oxide for the positive electrode active material.

### <Comparative Example A3>

A lithium-transition metal composite oxide was synthesized in the same manner as in Example A1 except that the second firing temperature was changed to 800°C, and a test cell was produced by using this composite oxide for the positive electrode active material.

### <Comparative Example A4>

A lithium-transition metal composite oxide was synthesized in the same manner as in Example A1 except that the Li/Me ratio was changed to 1.000, and a test cell was produced by using this composite oxide for the positive electrode active material.

### <Comparative Example A5>

A lithium-transition metal composite oxide was synthesized in the same manner as in Example A1 except that the Li/Me ratio was changed to 1.060 and the second firing temperature was changed to 800°C, and a test cell was produced by using this composite oxide for the positive electrode active material.

### <Example B1>

### [Synthesis of Lithium-Transition Metal Composite Oxide (Positive Electrode Active Material)]

A composite oxide containing Ni, Co, and Mn, and lithium hydroxide were mixed so that a mole ratio (Li/Me ratio) between the metal elements (Me) in the composite oxide and Li in lithium hydroxide was 1:1.050. This mixture was fed into a firing furnace to perform two-step firing. In the firing step, the temperature was raised under an oxygen flow (at a flow rate of 2 mL/min per 10 cm³ and 5 L/min per kilogram of the mixture) with an oxygen concentration of 95% at a first temperature-raising rate of 3°C/min from room temperature to 630°C (first firing temperature). Thereafter, the temperature was raised at a second temperature-raising rate of 1°C/min from 630°C to 770°C (second firing temperature), and held at 770°C for 5 hours. This fired product was crushed, and then washed with water to obtain a lithium-transition metal composite oxide (positive electrode active material).

The above lithium-transition metal composite oxide was analyzed by ICP-AES, and consequently confirmed that the composition of this composite oxide was Li_{0.99}Ni_{0.90}Co_{0.05}Mn_{0.05}O₂. From an SEM image of the lithium-transition metal composite oxide, this composite oxide was confirmed to be secondary particles each formed by aggregation of primary particles.

### <Example B2>

A lithium-transition metal composite oxide was synthesized in the same manner as in Example B1 except that the Li/Me ratio was changed to 1.030 and the holding time at the second firing temperature was changed to 8 hours, and a test cell was produced by using this composite oxide for the positive electrode active material.

### <Example B3>

A lithium-transition metal composite oxide was synthesized in the same manner as in Example B1 except that calcium hydroxide was further added as the raw material of the lithium-transition metal composite oxide, and a test cell was produced by using this composite oxide for the positive electrode active material. The composition of the positive electrode active material was confirmed to be Li_{0.99}Ni_{0.89}Co_{0.05}Mn_{0.04}Ca_{0.02}O₂ by ICP-AES.

### <Example B4>

A lithium-transition metal composite oxide was synthesized in the same manner as in Example B1 except that calcium hydroxide and strontium hydroxide were further added as the raw material of the lithium-transition metal composite oxide, and a test cell was produced by using this composite oxide for the positive electrode active material. The composition of the positive electrode active material was confirmed to be Li_{0.99}Ni_{0.885}Co_{0.04}Mn_{0.04}Ca_{0.03}Sr_{0.005}O₂ by ICP-AES.

### <Comparative Example B1>

A lithium-transition metal composite oxide was synthesized in the same manner as in Example B1 except that the first temperature-raising rate was changed to 5°C/min, the second temperature-raising rate was changed to 3°C/min, and the second firing temperature was changed to 750°C, and a test cell was produced by using this composite oxide for the positive electrode active material.

### <Example C1>

### [Synthesis of Lithium-Transition Metal Composite Oxide (Positive Electrode Active Material)]

A composite oxide containing Ni and Mn and lithium hydroxide were mixed so that a mole ratio (Li/Me ratio) between the metal elements (Me) in the composite oxide and Li in lithium hydroxide was 1:1.030. This mixture was fed into a firing furnace to perform two-step firing. In the firing step, the temperature was raised under an oxygen flow (at a flow rate of 2 mL/min per 10 cm³ and 5 L/min per kilogram of the mixture) with an oxygen concentration of 95% at a first temperature-raising rate of 2°C/min from room temperature to 650°C (first firing temperature). Thereafter, the temperature was raised at a second temperature-raising rate of 1°C/min from 650°C to 730°C (second firing temperature), and held at 730°C for 5 hours. This fired product was crushed, and then washed with water to obtain a lithium-transition metal composite oxide (positive electrode active material).

The above lithium-transition metal composite oxide was analyzed by ICP-AES, and consequently confirmed that the composition of this composite oxide was Li_{0.99}Ni_{0.90}Mn_{0.10}O₂. From an SEM image of the lithium-transition metal composite oxide, this composite oxide was confirmed to be secondary particles each formed by aggregation of primary particles.

### <Example C2>

A lithium-transition metal composite oxide was synthesized in the same manner as in Example C1 except that aluminum hydroxide was further added as the raw material of the lithium-transition metal composite oxide, and a test cell was produced by using this composite oxide for the positive electrode active material. The composition of the positive electrode active material was confirmed to be Li_{0.99}Ni_{0.91}Mn_{0.04}Al_{0.05}O₂ by ICP-AES.

### <Example C3>

A lithium-transition metal composite oxide was synthesized in the same manner as in Example C1 except that calcium hydroxide was further added as the raw material of the lithium-transition metal composite oxide, and a test cell was produced by using this composite oxide for the positive electrode active material. The composition of the positive electrode active material was confirmed to be Li_{0.99}Ni_{0.88}Mn_{0.09}Ca_{0.03}O₂ by ICP-AES.

### <Example C4>

A lithium-transition metal composite oxide was synthesized in the same manner as in Example C1 except that calcium hydroxide and strontium hydroxide were further added as the raw material of the lithium-transition metal composite oxide, and a test cell was produced by using this composite oxide for the positive electrode active material. The composition of the positive electrode active material was confirmed to be Li_{0.99}Ni_{0.87}Mn_{0.10}Ca_{0.02}Sr_{0.01}O₂ by ICP-AES.

### <Example C5>

A lithium-transition metal composite oxide was synthesized in the same manner as in Example C1 except that aluminum hydroxide, calcium hydroxide, and strontium hydroxide were further added as the raw material of the lithium-transition metal composite oxide, and a test cell was produced by using this composite oxide for the positive electrode active material. The composition of the positive electrode active material was confirmed to be Li_{0.99}Ni_{0.89}Mn_{0.03}Al_{0.05}Ca_{0.02}Sr_{0.01}O₂ by ICP-AES.

### <Comparative Example C1>

A lithium-transition metal composite oxide was synthesized in the same manner as in Example C1 except that the first temperature-raising rate was changed to 5°C/min, the second temperature-raising rate was changed to 3°C/min, and the second firing temperature was changed to 750°C, and a test cell was produced by using this composite oxide for the positive electrode active material.

### <Comparative Example C2>

A lithium-transition metal composite oxide was synthesized in the same manner as in Example C2 except that the first temperature-raising rate was changed to 5°C/min, the second temperature-raising rate was changed to 3°C/min, and the second firing temperature was changed to 750°C, and a test cell was produced by using this composite oxide for the positive electrode active material.

### <Example D1>

### [Synthesis of Lithium-Transition Metal Composite Oxide (Positive Electrode Active Material)]

A composite oxide containing Ni and Mn and lithium hydroxide were mixed so that a mole ratio (Li/Me ratio) between the metal elements (Me) in the composite oxide and Li in lithium hydroxide was 1:1.050. This mixture was fed into a firing furnace to perform two-step firing. In the firing step, the temperature was raised under an oxygen flow (at a flow rate of 2 mL/min per 10 cm³ and 5 L/min per kilogram of the mixture) with an oxygen concentration of 95% at a first temperature-raising rate of 2°C/min from room temperature to 670°C (first firing temperature). Thereafter, the temperature was raised at a second temperature-raising rate of 1°C/min from 670°C to 760°C (second firing temperature), and held at 760°C for 5 hours. This fired product was crushed, and then washed with water to obtain a lithium-transition metal composite oxide (positive electrode active material).

The above lithium-transition metal composite oxide was analyzed by ICP-AES, and consequently confirmed that the composition of this composite oxide was Li_{0.99}Ni_{0.81}Mn_{0.19}O₂. From an SEM image of the lithium-transition metal composite oxide, this composite oxide was confirmed to be secondary particles each formed by aggregation of primary particles.

### <Example D2>

A lithium-transition metal composite oxide was synthesized in the same manner as in Example D1 except that calcium hydroxide was further added as the raw material of the lithium-transition metal composite oxide, and a test cell was produced by using this composite oxide for the positive electrode active material. The composition of the positive electrode active material was confirmed to be Li_{0.99}Ni_{0.80}Mn_{0.18}Ca_{0.02}O₂ by ICP-AES.

### <Example D3>

A lithium-transition metal composite oxide was synthesized in the same manner as in Example D1 except that calcium hydroxide and strontium hydroxide were further added as the raw material of the lithium-transition metal composite oxide, and a test cell was produced by using this composite oxide for the positive electrode active material. The composition of the positive electrode active material was confirmed to be Li_{0.99}Ni_{0.80}Mn_{0.17}Ca_{0.02}Sr_{0.01}O₂ by ICP-AES.

### <Comparative Example D1>

A lithium-transition metal composite oxide was synthesized in the same manner as in Example D1 except that the first temperature-raising rate was changed to 5°C/min, the second temperature-raising rate was changed to 3°C/min, and the second firing temperature was changed to 800°C, and a test cell was produced by using this composite oxide for the positive electrode active material.

Each of the test cells of the Examples and Comparative Examples was subjected to a cycle test to evaluate capacity retention after the test. The evaluation results are shown in Table 1 to Table 4 together with the physical properties of the positive electrode active material. The capacity retention shown in each Table is a value relative to the capacity retention of the test cell of Comparative Example 1 in each Table being 100. In the positive electrode active material in the cycle test, the crystal structure in a surface layer of the primary particles present on surfaces of the secondary particles was analyzed by a nano-beam electron diffraction method using TEM, and average thicknesses of a rock-salt structure (NiO phase) and a spinel structure were measured.

### [Evaluation of Capacity Retention after Cycle Test]

Under a temperature environment of 25°C, the test cell was charged at a constant current of 0.3 C until a battery voltage reached 4.2 V, and charged at a constant voltage of 4.2 V until a current value reached 0.02 C. Thereafter, the test cell was discharged at a constant current of 0.5 C until the battery voltage reached 2.5 V. This charge-discharge cycle was performed with 500 cycles. A discharge capacity at the 1st cycle and a discharge capacity at the 500th cycle of the cycle test were determined, and the capacity retention was calculated with the following formula. Capacity retention (%) = (Discharge capacity at 500th cycle / Discharge capacity at 1st cycle) × 100

**[Table 1]**

| | Positive electrode active material | | | | | Battery |
|---|---|---|---|---|---|---|
| | Constituent element | Ni content rate | Added element | Thickness of NiO phase | Thickness of spinel structure | Capacity retention |
| Example A1 | Ni, Co, Al | 90 mol% | - | 2.0 nm | 4.0 nm | 105 |
| Example A2 | Ni, Co, Al | 90 mol% | - | 3.5 nm | 4.2 nm | 102 |
| Example A3 | Ni, Co, Al | 89 mol% | Ca | 1.2 nm | 2.6 nm | 112 |
| Example A4 | Ni, Co, Al | 90 mol% | Sr | 1.8 nm | 2.8 nm | 105 |
| Example A5 | Ni, Co, Al | 88 mol% | Ca, Sr | 1.0 nm | 1.8 nm | 120 |
| Comparative Example A1 | Ni, Co, Al | 90 mol% | - | 2.5 nm | 0 nm | 100 |
| Comparative Example A2 | Ni, Co, Al | 90 mol% | - | 3.5 nm | 0 nm | 93 |
| Comparative Example A3 | Ni, Co, Al | 90 mol% | - | 2.8 nm | 0 nm | 90 |
| Comparative Example A4 | Ni, Co, Al | 90 mol% | - | 2.6 nm | 0 nm | 91 |
| Comparative Example A5 | Ni, Co, Al | 90 mol% | - | 1.9 nm | 0 nm | 85 |

**[Table 2]**

| | Positive electrode active material | | | | | Battery |
|---|---|---|---|---|---|---|
| | Constituent element | Ni content rate | Added element | Thickness of NiO phase | Thickness of spinel structure | Capacity retention |
| Example B1 | Ni, Co, Mn | 90 mol% | - | 2.0 nm | 4.0 nm | 108 |
| Example B2 | Ni, Co, Mn | 90 mol% | - | 2.0 nm | 6.5 nm | 102 |
| Example B3 | Ni, Co, Mn | 89 mol% | Ca | 2.3 nm | 3.6 nm | 112 |
| Example B4 | Ni, Co, Mn | 88 mol% | Ca, Sr | 1.5 nm | 2.4 nm | 120 |
| Comparative Example B1 | Ni, Co, Mn | 90 mol% | - | 2.0 nm | 0 nm | 100 |

**[Table 3]**

| | Positive electrode active material | | | | | Battery |
|---|---|---|---|---|---|---|
| | Constituent element | Ni content rate | Added element | Thickness of NiO phase | Thickness of spinel structure | Capacity retention |
| Example C1 | Ni, Mn | 90 mol% | - | 2.8 nm | 4.2 nm | 103 |
| Example C2 | Ni, Mn | 91 mol% | Al | 2.8 nm | 4.0 nm | 105 |
| Example C3 | Ni, Mn | 88 mol% | Ca | 2.5 nm | 3.8 nm | 110 |
| Example C4 | Ni, Mn | 87 mol% | Ca, Sr | 1.8 nm | 2.1 nm | 118 |
| Example C5 | Ni, Mn | 89 mol% | Al, Ca, Sr | 2.1 nm | 2.3 nm | 116 |
| Comparative Example C1 | Ni, Mn | 90 mol% | Al | 2.2 nm | 0 nm | 100 |
| Comparative Example C2 | Ni, Mn | 90 mol% | - | 2.8 nm | 0 nm | 98 |

**[Table 4]**

| | Positive electrode active material | | | | | Battery |
|---|---|---|---|---|---|---|
| | Constituent element | Ni content rate | Added element | Thickness of NiO phase | Thickness of spinel structure | Capacity retention |
| Example D1 | Ni, Mn | 81 mol% | - | 2.8 nm | 4.5 nm | 103 |
| Example D2 | Ni, Mn | 80 mol% | Ca | 2.3 nm | 3.3 nm | 105 |
| Example D3 | Ni, Mn | 80 mol% | Ca, Sr | 2.0 nm | 2.5 nm | 115 |
| Comparative Example D1 | Ni, Mn | 81 mol% | - | 3.0 nm | 0 nm | 100 |

As shown in Table 1 to Table 4, all the test cells of Examples exhibit high capacity retention after the cycle test, and exhibit excellent cycle characteristics compared with the test cells of Comparative Examples. That is, when the composite oxide (Z) in which the rock-salt structure, the spinel structure, and the layered rock-salt structure are formed on the surface layer of the specific primary particles is used as the positive electrode active material, the cycle characteristics are remarkably improved compared with the case of using the positive electrode active material forming no spinel structure. This effect has been confirmed with any of the NCA-based active material containing Ni, Co, and Al and the NCM-based active material containing Ni, Co, and Mn.

From the results shown in Table 1 to Table 4, it is understood that the thicknesses of the rock-salt structure and the spinel structure, specifically the thickness of the spinel structure, and the presence or absence of addition of Ca and Sr significantly affect the cycle characteristics.

The present disclosure will be further described with the following embodiments.
Constitution 1:
   A positive electrode active material for a non-aqueous electrolyte secondary battery, including a lithium-transition metal composite oxide containing at least Ni, wherein
   the lithium-transition metal composite oxide is of secondary particles each formed by aggregation of primary particles, and the primary particles present on surfaces of the secondary particles have crystal structures including a rock-salt structure, a spinel structure, and a layered rock-salt structure that are formed in this order from the particle surfaces.
Constitution 2:
   The positive electrode active material for a non-aqueous electrolyte secondary battery according to Constitution 1, wherein an average thickness of the spinel structure is less than or equal to 5 nm.
Constitution 3:
   The positive electrode active material for a non-aqueous electrolyte secondary battery according to Constitution 1 or 2, wherein an average thickness of the rock-salt structure is less than or equal to 3 nm.
Constitution 4:
   The positive electrode active material for a non-aqueous electrolyte secondary battery according to any one of Constitutions 1 to 3, wherein the lithium-transition metal composite oxide contains at least one selected from Ca and Sr.
Constitution 5:
   The positive electrode active material for a non-aqueous electrolyte secondary battery according to any one of Constitutions 1 to 4, wherein a content rate of Ni in the lithium-transition metal composite oxide is greater than or equal to 80 mol% relative to a total number of moles of metal elements excluding Li.
Constitution 6:
   A non-aqueous electrolyte secondary battery, comprising:
   a positive electrode including the positive electrode active material according to any one of Constitutions 1 to 5;
   a negative electrode; and
   a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A positive electrode active material for a non-aqueous electrolyte secondary battery, including a lithium-transition metal composite oxide containing at least Ni, wherein
the lithium-transition metal composite oxide is of secondary particles each formed by aggregation of primary particles, and the primary particles present on surfaces of the secondary particles have crystal structures including a rock-salt structure, a spinel structure, and a layered rock-salt structure that are formed in this order from the particle surfaces.

2. The positive electrode active material for a non-aqueous electrolyte secondary battery according to claim 1, wherein an average thickness of the spinel structure is less than or equal to 5 nm.

3. The positive electrode active material for a non-aqueous electrolyte secondary battery according to claim 1, wherein an average thickness of the rock-salt structure is less than or equal to 3 nm.

4. The positive electrode active material for a non-aqueous electrolyte secondary battery according to claim 1, wherein the lithium-transition metal composite oxide contains at least one selected from Ca and Sr.

5. The positive electrode active material for a non-aqueous electrolyte secondary battery according to claim 1, wherein a content rate of Ni in the lithium-transition metal composite oxide is greater than or equal to 80 mol% relative to a total number of moles of metal elements excluding Li.

6. A non-aqueous electrolyte secondary battery, comprising:
a positive electrode including the positive electrode active material according to any one of claims 1 to 5;
a negative electrode; and
a non-aqueous electrolyte.
